Europäisches Patentamt

European Patent Office

Office européen des brevets

(19)

(11) Publication number: **0 255 748 B1**

# (12) EUROPEAN PATENT SPECIFICATION

(45) Date of publication of patent specification: **16.10.91**    (51) Int. Cl.⁵: **C01B 3/36**

(21) Application number: **87201472.5**

(22) Date of filing: **03.08.87**

The file contains technical information submitted after the application was filed and not included in this specification

(54) **Process for partial oxidation of a hydrocarbon-containing fuel.**

(30) Priority: **05.08.86 GB 8619076**

(43) Date of publication of application:
**10.02.88 Bulletin 88/06**

(45) Publication of the grant of the patent:
**16.10.91 Bulletin 91/42**

(84) Designated Contracting States:
**BE DE ES FR GB IT NL SE**

(56) References cited:
**EP-A- 0 130 630**
**AT-B- 369 345**
**FR-A- 1 073 523**
**GB-A- 2 151 348**
**US-A- 4 525 175**

**Hydrocarbon Processing. pages 115-119 -
September 1983**

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Martens, Franciscus Johanna Arnol-
dus**
**Badhuisweg 3**
**NL-1031 CM Amsterdam(NL)**
Inventor: **Hasenack, Hendrikus Johannes An-
tonius**
**Badhuisweg 3**
**NL-1031 CM Amsterdam(NL)**

(74) Representative: **Spierenburg, Jan et al**
**Shell Internationale Research Maatschappij
B.V. Patents, Licensing & Trade Marks Di-
vision P.O. Box 302**
**NL-2501 CH The Hague(NL)**

## Description

The invention relates to a process for partial oxidation of a hydrocarbon-containing fuel using a multi-orifice burner.

In particular, the invention relates to a process for partial oxidation of a hydrocarbon-containing fuel wherein an oxygen-containing gas and a hydrocarbon-containing fuel are supplied to a gasification zone through a quadruple orifice burner comprising a concentric arrangement of 3 oxygen-passages or channels and 1 fuel passage or channel, and wherein autothermically a gaseous stream containing synthesis gas is produced under appropriate conditions.

The oxygen-containing gas is usually air or pure oxygen or a mixture thereof. In order to control the temperature in the gasification zone a moderator gas can be supplied to said zone.

In particular, the invention relates to a process as described in the foregoing, wherein a liquid is suitable as a fuel.

More in particular, (heavy) residue feedstock is suitable to be used as a fuel.

In such processes it is necessary to ensure fine atomization of the fuel and good and rapid contacting or mixing of the fuel and the oxygen-containing gas in order to obtain an excellent gasification process.

It is an object of the invention to provide a process for partial oxidation of a hydrocarbon-containing fuel wherein in situ fine atomization of the fuel is obtained. It is another object of the invention to provide a process for partial oxidation of a hydrocarbon-containing fuel wherein a good and rapid mixing or contacting of oxygen and fuel is obtained and pre-ignition or flame-flash-back is prevented.

It is another object of the invention to provide a process for (heavy) residue gasification wherein economic process conditions (for example reduction of supply moderator gas and reduction of soot production) are achieved with a sufficiently long burner-lifetime (longer than 8000 operating hours).

The invention therefore provides a process for partial oxidation of hydrocarbon-containing fuel comprising the steps of supplying an oxygen-containing gas and hydrocarbon-containing fuel to a gasification zone through concentric arranged circular passages, characterized in that the oxygen-containing gas is supplied through the central channel of the concentric arrangements at a velocity 21 to 42 m/s in an amount 5 to 40 mass per cent of a total amount of oxygen-containing gas, oxygen-containing gas is supplied through the first concentric channel encircling the central channel at a velocity 60-120 m/s; that (heavy) residue feedstock is applied as fuel, said fuel having a specific gravity at 15 °C in the range of 980-1018 kg/m$^3$ and a viscosity at the channel outlet in the range of 0.02-0.2 Pa.s and being supplied through the second concentric channel encircling the first concentric channel at a velocity 3.0-3.8 m/s and remaining oxygen-containing gas is supplied through the third concentric channel encircling the second concentric channel at a velocity 60-120 m/s measured at the outlet of the said respective concentric channels into the gasification zone and wherein the mass flows through the first and third channel are distributed in an even manner.

The velocity measurement can be carried out in any way suitable for the purpose and will not be described in detail.

In an advantageous embodiment of the invention the oxygen-containing gas contains steam or carbon dioxide as a moderator. In another advantageous embodiment of the invention the gasification process is carried out at a pressure of 0.1-12 MPa.

The fuel and the oxygen-containing gas are supplied to the gasification zone through a concentric burner-arrangement of 3 oxygen passages and 1 fuel passage. A central channel for oxygen supply is surrounded by a first annular channel for oxygen supply.

The said first annular channel is surrounded by a second annular channel for fuel supply and the said second channel is surrounded by a third annular channel for oxygen supply.

Multi-orifice burners comprising arrangements of annular concentric channels for supplying oxygen and fuel to gasification zones are known as such and will not be described in detail.

Usually such burners comprise hollow wall members with internal cooling fluid passages. However, the burner may for example be provided with a suitable ceramic or refractory lining applied onto or suspended by a means closely adjacent to the outer surface of the burner front wall for resisting the heat load during operation or heat-up/shut down situations of the burner.

It is remarked that US patent specification No. 4,525,175 discloses a concentric arrangement of channels in a burner for partial oxidation of slurries of solid carbonaceous fuel in a liquid carrier.

However, the specific process of the invention for partial oxidation of (heavy) residue feedstock in order to obtain a fine atomization of the fuel and a good and rapid mixing cannot be derived therefrom.

According to the invention the oxygen and the fuel are supplied to the gasification zone through the respective channels at specific velocities in order to obtain a good atomization and mixing.

When carrying out the specific process of the invention a typical crude syngas composition having relatively high contents of $H_2$ and CO and having a relatively low content of $N_2$ is obtained.
The invention will now be described in more detail by reference to the following example.

Example

Tests have been carried out under the following conditions:
a) Feedstock

| | |
|---|---|
| specific gravity at 15 degr. C $(kg/m^3)$ | 980 - 1018 |
| viscosity at channel outlet (Pa.s) | 0.02 - 0.2 |
| composition C %wt | 86.7 - 87.4 |
| H | 10.2 - 10.8 |
| S | 1.26 - 1.39 |
| N | 0.3 - 0.5 |
| ash | 0.064 |
| typical metal content V ppm | 252 |
| Ni ppm | 82 |
| Fe ppm | 27 |
| conradson carbon residue %wt | 23 |

b) oxygen composition
$O_2$ %vol        99.05
$N_2$ %vol        0.01
Ar%vol        0.94
$H_2O$%vol        --

c) Operating conditions
feedstock (fuel)
mass flow (kg/s)        1.1 - 1.4
supply temperature to channel (degr.C.)        120 - 170
supply pressure (MPa)        3.6 - 3.7
velocity at fuel channel outlet (m/s)        3.0 - 3.8
resulting slot width (mm)        3
oxygen containing gas
oxygen to fuel ratio (kg/kg)        1.0 - 1.3
steam to fuel ratio (kg/kg)        0.3 - 0.65
supply temperature of mixture (degr.C)        210 - 220
supply pressure (MPa)        3.6 - 3.7
Distribution of mass flow and velocity
central channel, 5-40 mass per cent        21 - 42 m/s
first concentric channel        60 - 120 m/s
third concentric channel        60 - 120 m/s
wherein the mass flows through the first and third channel are distributed in an even manner
reactor
pressure (MPa)        0.1 - 12
temperature (degr.C.)        1300 - 1450
Typical crude syngas composition %vol dry $CO_2$        = 5.3 - 9.1
$H_2S$        = 0.1 - 0.3
$O_2$ =        0.0 - 0.1
$H_2$ =        44.7 - 47.5

$N_2$ = 0.1 - 0.4
CO = 43.7 - 48.9
$CH_4$ = 0.05 - 0.3

unconverted carbon-containing products ca 0.3-4% by weight on fuel, may be added to the feedstock.

In an advantageous embodiment of the invention the burner-lifetime can be increased by supplying an inert gas (a gas which does not react exothermically) such as $H_2O$, $CO_2$, $CH_4$ and the like through a fourth concentric annular channel surrounding the third channel. In this manner flame-lifting can occur and the heat flux can decrease.

## Claims

1. A process for partial oxidation of hydrocarbon-containing fuel comprising the steps of supplying an oxygen-containing gas and hydrocarbon-containing fuel to a gasification zone through concentric arranged circular passages, characterized in that the oxygen-containing gas is supplied through the central channel of the concentric arrangements at a velocity 21 to 42 m/s in an amount 5 to 40 mass per cent of a total amount of oxygen-containing gas, oxygen-containing gas is supplied through the first concentric channel encircling the central channel at a velocity 60-120 m/s; that (heavy) residue feedstock is applied as fuel, said fuel having a specific gravity at 15 °C in the range of 980-1018 kg/m³ and a viscosity at the channel outlet in the range of 0.02-0.2 Pa.s and being supplied through the second concentric channel encircling the first concentric channel at a velocity 3.0-3.8 m/s and remaining oxygen-containing gas is supplied through the third concentric channel encircling the second concentric channel at a velocity 60-120 m/s, measured at the outlet of the said respective concentric channels into the gasification zone and wherein the mass flows through the first and third channel are distributed in an even manner.

2. The process as claimed in claim 1 characterized in that the oxygen-containing gas contains a moderator.

3. The process as claimed in claim 2 characterized in that the moderator is steam or carbon dioxide.

4. The process as claimed in any one of claims 1-3 characterized in that the process is carried out at a pressure of 0.1-12 MPa.

5. The process as claimed in any one of claims 1-4 characterized by the step of supplying an inert gas (a gas which does not react exothermically) through a fourth concentric channel encircling the said third channel.

## Revendications

1. Un procédé d'oxydation partielle d'un combustible hydrocarboné comprenant les étapes d'introduction d'un gaz contenant de l'oxygène et d'un combustible hydrocarboné dans une zone de gazéification par des passages circulaires disposés de manière concentrique, caractérisé en ce que du gaz contenant de l'oxygène est introduit par le canal central des arrangements concentriques à une vitesse de 21 à 42 m/s, à raison d'une quantité de 5 à 40 % en poids par rapport à la quantité totale de gaz contenant de l'oxygène, du gaz contenant de l'oxygène est introduit par le premier canal concentrique entourant le canal central à une vitesse de 60 à 120 m/s ; qu'une charge de résidu (lourd) est utilisée comme combustible, ce combustible ayant une masse volumique à 15 °C comprise entre 980 et 1018 kg/m³ et une viscosité à la sortie du canal comprise entre 0,02 et 0,2 Pa.s et étant introduit par le deuxième canal concentrique entourant le premier canal concentrique à une vitesse de 3,0 à 3,8 m/s et le reste du gaz contenant de l'oxygène est introduit par le troisième canal concentrique entourant le deuxième canal concentrique à une vitesse de 60 à 120 m/s, ces vitesses étant mesurées à la sortie des canaux concentriques respectifs dans la zone de gazéification et où les débits massiques par le premier canal et le troisième sont distribués de manière égale.

2. Un procédé selon la revendication 1, caractérisé en ce que le gaz contenant de l'oxygène contient un modérateur.

3. Un procédé selon la revendication 2, caractérisé en ce que le modérateur est de la vapeur d'eau ou de

4

l'anhydride carbonique.

4. Un procédé selon l'une quelconque des revendications 1-3, caractérisé en ce que le procédé est mis en oeuvre à une pression de 0,1-12 MPa.

5. Un procédé selon l'une quelconque des revendications 1-4, caractérisé par l'étape d'introduction d'un gaz inerte (un gaz qui ne réagit pas de manière exothermique) par un quatrième canal concentrique entourant le troisième canal.

**Patentansprüche**

1. Ein Verfahren zur Partialoxidation von kohlenwasserstoffhaltigem Brennstoff, umfassend die Schritte des Einspeisens eines sauerstoffhaltigen Gases und eines kohlenwasserstoffhaltigen Brennstoffes in eine Vergasungszone durch konzentrisch angeordnete kreisförmige Durchgänge, dadurch gekennzeichnet, daß das sauerstoffhaltige Gas mit einer Geschwindigkeit von 21 bis 42 m/sec und in einer Menge von 5 bis 40 Masseprozent, bezogen auf die Gesamtmenge an sauerstoffhaltigem Gas, durch den zentralen Kanal der konzentrischen Anordnungen geleitet wird, das sauerstoffhaltige Gas mit einer Geschwindigkeit von 60 bis 120 m/sec durch den ersten konzentrischen Kanal, welcher den Zentralkanal umschließt, zugeführt wird; daß (schweres) Rückstands-Einsatzmaterial als Brennstoff eingesetzt wird, wobei der genannte Brennstoff ein spezifisches Gewicht bei $15°C$ im Bereich von 980 bis 1018 $kg/m^3$ und eine Viskosität am Kanalausgang im Bereich von 0,02 bis 0,2 Pa.s aufweist und mit einer Geschwindigkeit von 3,0 bis 3,8 m/sec durch den zweiten konzentrischen Kanal, welcher den ersten konzentrischen Kanal umgibt, geleitet wird und verbleibendes sauerstoffhaltiges Gas mit einer Geschwindigkeit von 60 bis 120 m/sec durch den dritten konzentrischen Kanal, welcher den zweiten konzentrischen Kanal umgibt, geleitet wird, wobei die Geschwindigkeit am Auslaß der genannten entsprechenden konzentrischen Kanäle in die Vergasungszone gemessen wird, und wobei die Masseströme durch den ersten und zweiten Kanal gleichmäßig verteilt sind.

2. Das Verfahren wie in Anspruch 1 beansprucht, dadurch gekennzeichnet, daß das sauerstoffhaltige Gas einen Moderator enthält.

3. Das Verfahren wie in Anspruch 2 beansprucht, dadurch gekennzeichnet, daß der Moderator Dampf oder Kohlendioxid ist.

4. Das Verfahren wie in einem der Ansprüche 1 bis 3 beansprucht, dadurch gekennzeichnet, daß das Verfahren bei einem Druck von 0,1 bis 12 MPa durchgeführt wird.

5. Das Verfahren wie in einem der Ansprüche 1 bis 4 beansprucht, gekennzeichnet durch die Verfahrensstufe des Zuführens eines Inertgases(ein Gas, welches nicht exotherm reagiert) durch einen vierten konzentrischen Kanal, welcher den genannten dritten Kanal umgibt.